# EUROPEAN PATENT APPLICATION

(11) **EP 3 081 453 A1**
(43) Date of publication of application: **19.10.2016**
(21) Application number: 15163337.7
(22) Date of filing: 13.04.2015
(51) Int. Cl.: B62B 3/18, B62B 3/00

(54) **ROLL CONTAINER AND METHOD OF TRANSPORTING A PLURALITY OF ROLL CONTAINERS**

(71) Applicant: K. Hartwall Oy AB, 01150 Söderkulla (FI)
(72) Inventor: Korhonen, Eero, 01150 Söderkulla (FI); Järvi, Mikko, 01150 Söderkulla (FI)
(74) Representative: Seppo Laine Oy

(57) **Abstract**

An improved roll container of a nesting type is proposed for facilitating bulk handling with machine assistance. The roll container includes a rear section (130) and thereto pivotably attached first and second side frame section (110, 120). The first and second side frame section are configured to be pivoted between a deployed state, wherein the side frame sections extend from the rear section parallel to each other, and a nesting state, wherein the side frame sections extend from the rear section away from each other. Contrary to the prevailing standard, the roll container also includes a chassis (160), which extends from the rear section so as to provide a support for lifting a plurality of such roll containers in a nesting configuration from below with forks of a forklift, for example.

## Description

### TECHNICAL FIELD

The present invention relates to logistics equipment. In particular, the invention relates to roll containers of a nesting type. More specifically, the invention relates to roll containers according to the preamble portion of claim 1 and to the method according to the preamble portion of claim 15.

### BACKGROUND ART

Roll containers are a popular means of moving and temporary storage of goods. While there are a variety of different types of roll containers, a nesting type has achieved great popularity. The European standard for roll containers EN12674-1:1999 discloses the five main types of nesting roll containers:
A. the "A-frame chassis" type,
B. the "Z-frame chassis" type,
C. the "U-frame chassis" type,
D. the "V-frame" type, and
E. the "L-frame" type.

The "A-frame chassis" type has gained great popularity. As the name suggests, the type employs an A-shaped chassis in plan view. The "A-frame chassis" type has a back frame section with a rear wall extending laterally and integral side pieces, which are known as trombones, extending longitudinally, i.e. orthogonally to the rear wall. The rear castors are attached to the trombones and the front castors are attached to the chassis. "A-frame chassis" roll containers also comprise a liftable floor, which is hinged to the back frame section of the container. In a horizontal position the floor is able to receive and support the contents of the container. In a vertical position the floor is folded parallel to the back frame section for accommodating efficient nesting. Side frame sections may be hinged to the trombones. When nested, the side frame sections are folded parallel to the back frame section, wherein they are positioned above the chassis. The projecting A-frame chassis can then be rolled under a similar nesting unit.

Contrary to the "A-frame chassis" roll container, the "V-frame" roll container does not contain a chassis or trombones and the side frame sections are hinged to the very rear of the back frame section (cf. to the trombones of "A-frame chassis" roll containers) and arranged to fold out so as to form a V-shape with a flat rear part formed by the back frame section. The folding principles of these types are therefore the exact opposites. As there is no chassis, the castors of "V-frame" roll containers are connected to the side and back frame sections.

While the "A-frame chassis", "V-frame" and other roll container types are very efficient in view of return logistics, there still remains a long standing need to improve the handling of empty nesting roll containers.

It is therefore an aim of certain embodiments of the present invention to provide an improved roll container of a nesting type, which would not only have the nesting ability of standard containers but also facilitate bulk handling with machine assistance. It is a particular aim to provide a roll container, which would be suitable for bulk handling by transporting a plurality of such roll containers in a nesting configuration with a forklift.

### SUMMARY

The aim is achieved with aid of a novel and unorthodox roll container design, which is based on the premise of a standard V-frame form, but which - contrary to the prevailing standard - also includes a chassis. The roll container of a nesting type includes a rear section. Pivotably attached to the rear section there is a first and second side frame section. The first and second side frame section are configured to be pivoted between a deployed state, wherein the side frame sections extend from the rear section parallel to each other, and a nesting state, wherein the side frame sections extend from the rear section away from each other. The chassis extends from the rear section so as to provide a support for lifting a plurality of such roll containers in a nesting configuration from below with forks of a forklift, for example.

More specifically, the roll container according to the present invention is characterized by the characterizing portion of claim 1.

On the other hand the aim is achieved with a novel method of transporting a plurality of such roll containers in a nesting configuration by lifting said plurality from below and transporting it with lifting forks of a forklift.

More specifically, the method according to the present invention is characterized by the characterizing portion of claim 15.

Considerable benefits are gained with aid of the present invention.

The additional chassis provides a sturdy lifting support for the lifting forks of a forklift to raise a plurality of nesting roll containers thus significantly expediting return logistics of roll containers. Not only is the transport faster than compared to manual transport, less physical force is required from the logistics personnel.

On the other hand, the chassis enables a brake installation to the front of the roll container.

The roll container may also include trombones. In such embodiments, the trombones add the further benefit of providing a robust mounting structure for the pivotable base and for the chassis. On the other hand the trombones may be used for optimizing the nesting depth of the roll containers thus decreasing force exerted between containers in nesting, which lengthens the life span of the product.

### BRIEF DESCRIPTION OF DRAWINGS

In the following, exemplary embodiments of the invention are described in greater detail with reference to the accompanying drawings in which:
Fig. 1 presents an upper frontal perspective view of a roll container according to one embodiment in a deployed state, wherein the upper panel of a two-part door is open and the lower panel is closed,
Fig. 2 presents the roll container of Fig. 1 in a nesting state,
Fig. 3 presents an upper rear perspective view of a plurality of the roll containers of Fig. 2 in a nesting configuration being lifted with lifting forks of a forklift,
Fig. 4 presents a top plan view of Fig. 3, and
Fig. 5 presents a lower rear perspective view of Fig. 3.

### DETAILED DESCRIPTION OF EXEMPLARY EMBODIMENTS

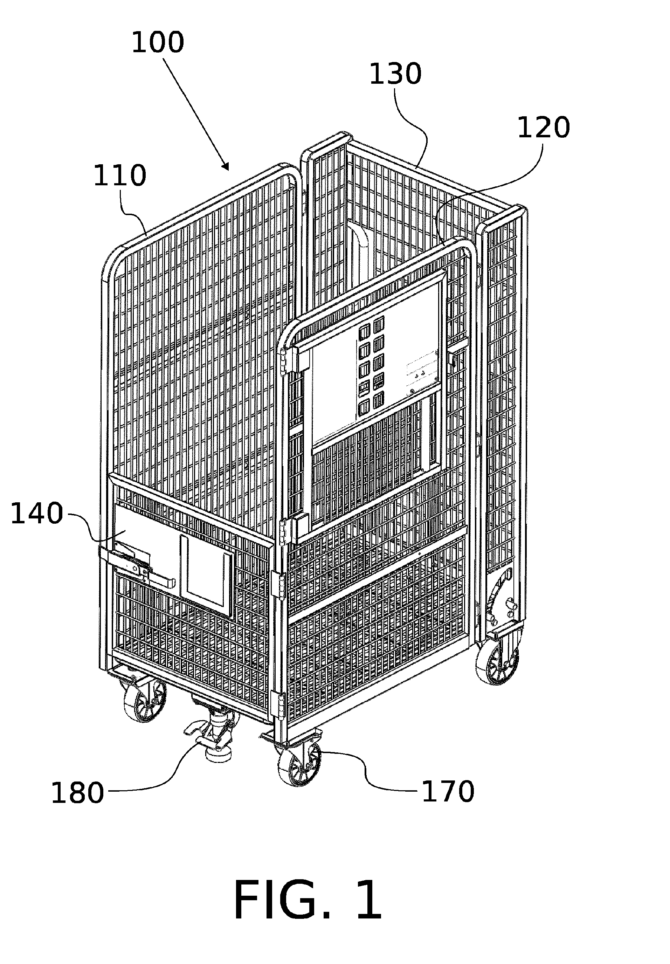

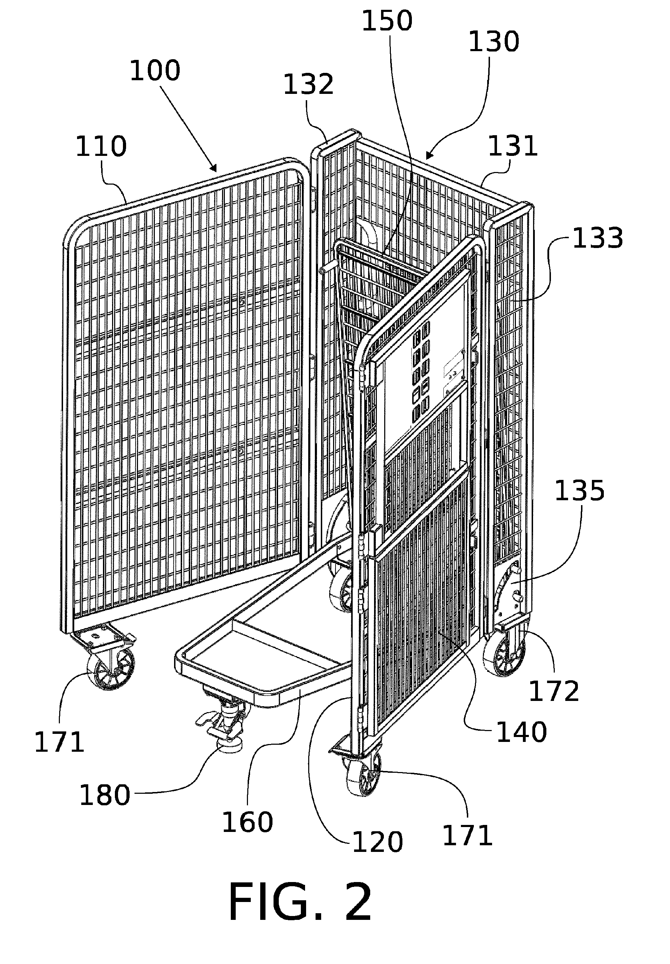

As shown in Fig. 1, the roll container 100 according to one embodiment may be used in four different employed configurations. In the illustrated example, the upper half of a two-part door 140 is opened, whereas the lower half is closed. Alternatively, both halves could be open or closed or only the lower half could be open. The door 140 is configured to close the front face of the roll container 100. More specifically, the door 140 extends between the first side frame section 110 and the second side frame section 120. Both halves of the door 140 are therefore hinged to the frontal edge of the second side frame section 120 and configured to clamp onto the frontal edge of the first side frame section 110. The hinge between the second side frame section 120 and the door 140 preferably permits the door 140 to fold flat against the second side frame section 120 for flanking the roll container 100 (Fig. 2). It is also possible to provide the door 140 in one, three or four parts or to omit it altogether.

Fig. 1 also shows that in the deployed state the roll container 100 forms a prismatic unit, where the first and second side frame section 110, 120 extend orthogonally to the rear wall of rear section 130. In the deployed state the base rests against the wheel plates of the castors 170 attached to the frontal bottom edge of the first and second side frame sections 110, 120. Fig. 2 shows how the attachment of the base 150 to the wheel plates of the swivel castors 171 is enhanced by the protruding securing pins on the bottom surface of the base 150 and the corresponding recipient openings in the wheel plates. The pin connection also prevents the side frame sections 110, 120 from opening. Naturally, it is foreseeable to reverse the pin connection could also be reversed by adding a pin or similar protuberance to extend vertically from the wheel plate and by providing the base with a corresponding receptive shape, opening or recess.

Figs. 1 and 2 show that the rear section 130 of the roll container 100 is fixed. Similarly to "A-frame chassis" roll containers and contrary to "V-frame" roll containers, the rear section 130 includes a rear wall 131, which extends transversally, and trombones 132, 133 extending from the rear wall 131 longitudinally, i.e. orthogonally to the rear wall 131. In this context the term *longitudinal* refers to the main travelling direction of the roll container, which is the same as the nesting direction. The longitudinal direction is also the direction steered to by the fixed castors. Typically, the largest horizontal dimension of roll containers is in the longitudinal direction. Accordingly, the term *transversal* refers to the horizontal direction orthogonal to the longitudinal direction. The trombones 132, 133 are relatively short integral sections, which serve the purpose of providing a robust mounting structure for the pivotable base and for the chassis. On the other hand, the trombones set the nesting depth of the roll container in a queue formation, whereby the side frame sections are less likely to become wedged against each other, which increases the lifespan of the roll container.

The trombones 132, 133 also act as pivoting points for the base 150. Generally speaking, the trombones 132, 133 and the base 150 include a rotation interface there between configured to facilitate rotation of the base 150 about a horizontal axis. In the illustrated example, the rotation interface is provided by equipping the first and second trombone 132, 133 with a hinge plate 135 having openings to receive cooperating protuberances of the base 150. More specifically, the hinge plate 135 includes a first opening, which is configured to receive the corresponding axle of the base 150 in a rotatable and preferably translating manner. The hinge plate 135 also includes a second arcuate opening for receiving a corresponding guide pin of the base 150, wherein the pin is adapted to travel in the arcuate opening of the hinge plate 135 for guiding the base 150 between the horizontal deployed orientation and the angled, i.e. substantially vertical, folded orientation. Fig. 2 shows the base 150 in a folded state to facilitate nesting. To keep the base 150 in the folded state, the second arcuate opening in the hinge plate 135 has a vertical or substantially vertical ending near the rear wall 131 (Fig. 1). The vertical ending acts as a terminal recess, into which the guide pin of the base 150 may be dropped for maintaining the upright position of the base 150 in the folded state. Conversely, the base 150 must be lifted before rotation to release the guide pin from the terminal recess, when manipulating the base 150 toward the horizontal deployed state. Similarly, the first opening in the hinge plate 153 for the axle of the base 150 is shaped to permit vertical translation of the axle to facilitate said vertical movement of the base 150.

The trombones 132, 133 include hinges for connecting the first and second side frame section 110, 120 to the rear section 130. The hinges are configured to allow rotation of the side frame sections 110, 120 to expand for opening the roll container 100 into the nesting state. Said rotation is specifically rotation about a vertical axis provided by the hinge or hinges connecting the side frame sections 110, 120 to the trombones 132, 133. Yet more specifically, the rotation necessary for configuring the roll container 100 into the nesting state is performed by rotating the free end of the side frame section 110, 120 about the hinge at the opposing end such that said free ends of the side frame sections 110, 120 distanced from each other. In other words, the side frame sections 110, 120 are opened into opposite directions. The hinges preferably include restrictors limiting the opening angle of the side frame sections. In the nesting state, the side frame sections 110, 120 are pivoted away from each other such that the distal ends of the side frame sections 110, 120 are farther apart from each other than the proximal hinged ends. The trombones 132, 133 also act as mounting points for the rear castors. The rear castors are fixed castors 172, which are attached to the bottom of the trombones 132, 133. The front castors are swivel castors 171 attached to the frontal bottom surface of the side frame sections 110, 120. The swivel castors 171 enable the side frame sections 110, 120 to be turned in respect to the trombones 132, 133 without excess sliding between the wheels of the castors and the underlying surface.

According to another embodiment (not shown), the roll container is constructed without trombones, wherein the base and side frame sections are pivoted directly to the rear wall of the rear section.

The chassis 160 of the roll container 100 is in the illustrated example shown as a traditional A-frame chassis extending longitudinally from rear section 130. The rear part of the chassis has two parallel sections, which are connected to the trombones through screw joints or alternatively by welding, for example. The chassis 160 therefore has two main beams extending away from the rear section 130 in a slanted manner so as to converge at a transversally extending terminal beam at the front of the roll container. Attached to the terminal beam is a foot-operated brake 180. In the illustrated embodiment the brake 180 is a conventional friction brake having a foot-operated lever for engaging and disengaging a protruding piston with a friction pad for making contact with the underlying surface. The chassis provides a particularly advantageous mounting point for a brake, which may be deployed in all states of the roll container. In other words, the brake 180 is attached to the narrower longitudinal end of the A-frame chassis 160. A reinforcement beam is preferably provided parallel to the terminal beam toward the rear section 130 of the roll container 100.

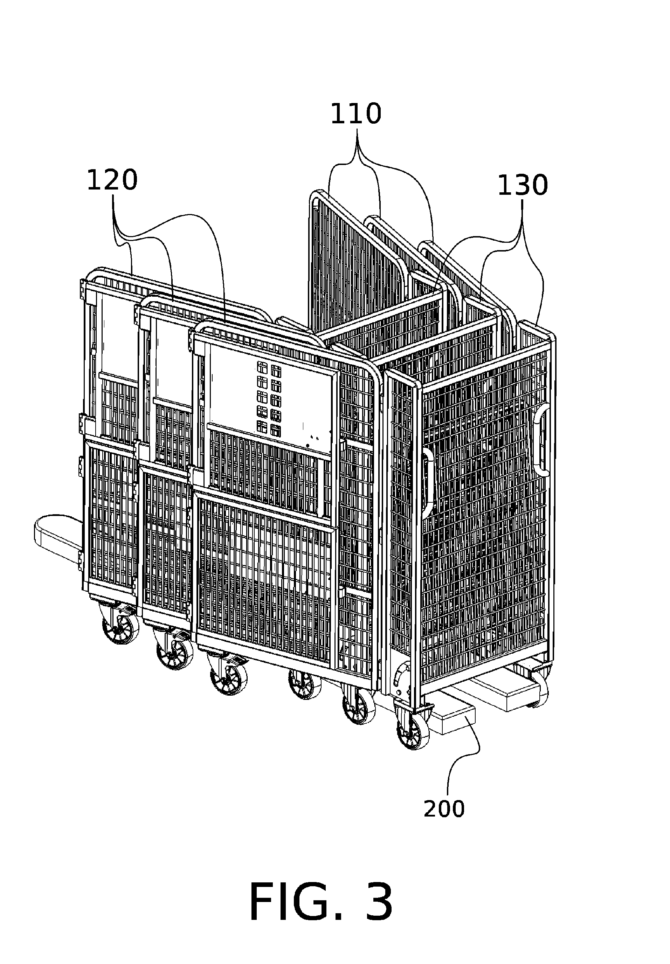

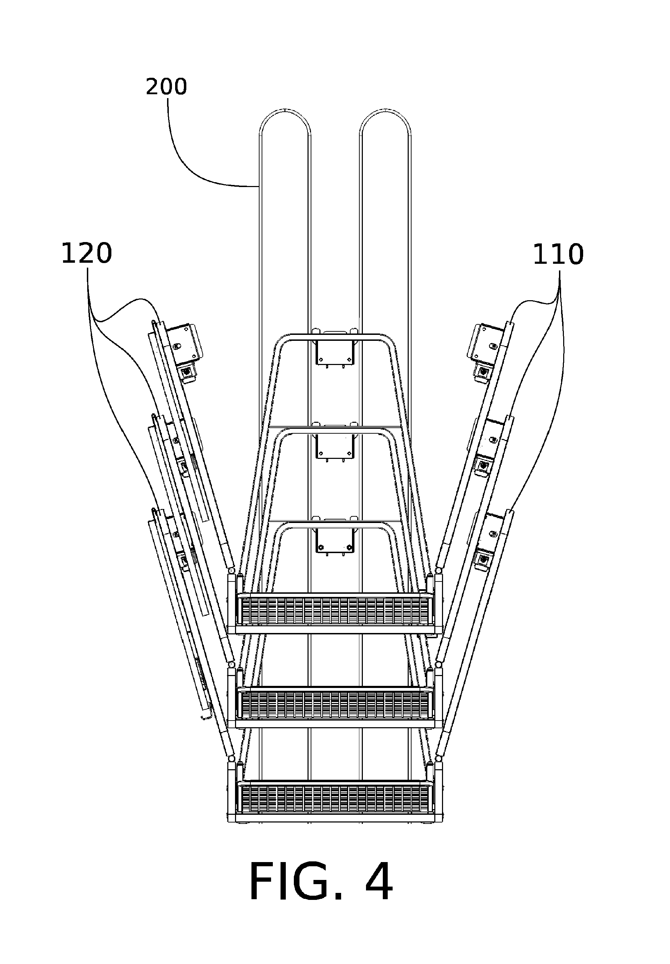

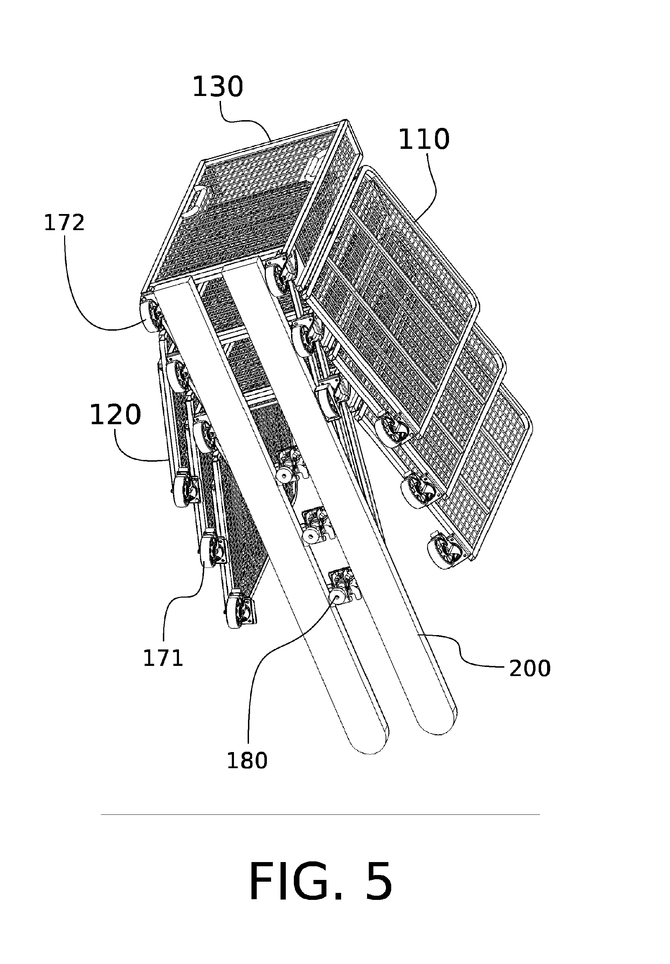

The construction of the roll container 100 is utilized in return logistics by transporting a plurality of such roll containers 100 in a nesting formation by using a fork lift. Figs. 3 to 5 show an arrangement, where three roll containers 100 are arranged in a nesting queue and the lifting forks 200 of a forklift (not shown) are driven underneath the chassis of the roll containers. As best seen from Fig. 5, the rear castors 172 and the (front) brakes 181 are located to the bottom of the roll container 100 such that the lifting forks 200 may be inserted to between the fixed castors 172 and around the brakes 180. Fig 4, on the other hand, illustrates how the weight of the roll container 100 is set onto the lifting forks 200. Because the chassis 160 is an A-frame chassis, the slanted side beams of the chassis 160 overlap the lifting forks 200 over a relatively long stretch. The queue of roll containers 100 therefore stabile, whereby the plurality of roll containers is not easily tipped on any side.

**TABLE 1: LIST OF REFERENCE NUMBERS.**

| Number | Part |
|---|---|
| 100 | roll container |
| 110 | 1^{st} side frame section |
| 120 | 2^{st} side frame section |
| 130 | rear section |
| 131 | rear wall |
| 132 | first trombone |
| 133 | second trombone |
| 135 | hinge plate |
| 140 | door |
| 150 | base |
| 160 | chassis |
| 170 | castor |
| 171 | swivel castor |
| 172 | fixed castor |
| 180 | brake |

## Claims

1. A roll container (100) of a nesting type comprising:
- a rear section (130),
- a first side frame section (110) pivotably attached to the rear section (130), and
- a second side frame section (120) pivotably attached to the rear section (130) and laterally opposing the first side frame section (110),
wherein the first and second side frame section (110, 120) are configured to be pivotable between:
- a deployed state, in which deployed state the first and second side frame section (110, 120) extend from the rear section (130) parallel to each other, and
- a nesting state, in which nesting state the first and second side frame section (110, 120) extend from the rear section (130) away from each other,
**characterized by** a chassis (160) extending from the rear section (130) so as to provide a support for lifting a plurality of such roll containers (100) in a nesting configuration.

2. The roll container (100) according to claim 1, wherein the rear section (130) is a fixed rear section.

3. The roll container (100) according to claim 1 or 2, wherein the rear section (130) comprises:
- a rear wall (131),
- a first trombone (132), which extends from the rear wall (131) orthogonally thereto, wherein the first side frame section (110) is hinged to the first trombone (132), and
- a second trombone (133), which extends from the rear wall (131) orthogonally thereto, wherein the second side frame section (120) is hinged to the second trombone (133).

4. The roll container (100) according to any of the preceding claims, wherein the chassis (160) extends longitudinally from the rear section (130).

5. The roll container (100) according to any of the preceding claims, wherein the chassis (160) is an A-frame chassis.

6. The roll container (100) according to any of the preceding claims, wherein the roll container (100) comprises a brake (180) provided to the chassis (160).

7. The roll container (100) according to claims 5 and 6, wherein the brake (180) is attached to the narrower longitudinal end of the A-frame chassis (160).

8. The roll container (100) according to any of the preceding claims, wherein the roll container (100) comprises castors (171) attached to the side frame sections (110, 120).

9. The roll container (100) according to claim 8, wherein the castors (171) are swivel castors.

10. The roll container (100) according to any of the preceding claims, wherein the roll container (100) comprises castors (172) attached to the rear section (130).

11. The roll container (100) according to claim 10, wherein the castors (172) attached to the rear section (130) are fixed castors, which are attached to the trombones (132, 133).

12. The roll container (100) according to claim 10 or 11, wherein the castors (172) are spaced apart so as to receive lifting forks (200) of a forklift there between.

13. The roll container (100) according to any of the preceding claims 3 to 12, wherein the trombones (132, 133) and the base (150) comprise a rotation interface there between configured to facilitate rotation of the base (150) about a horizontal axis.

14. The roll container (100) according to claim 13, wherein the rotation interface comprises:
- an axle and a guide pin spaced apart and extending from the sides of the base (150), and
- a hinge plate (135) provided to each trombone (132, 133), which hinge plate (135) comprises:
o a first opening, which is configured to receive the axle of the base (150) in a rotatable and translating manner, and
o an arcuate second opening, which is configured to receive the guide pin of the base (150) and which arcuate opening defines the path for the rotation of the base (150) and includes a terminal recess, into which the guide pin of the base (150) may be dropped for maintaining the upright position of the base (150) in the folded state.

15. Method of transporting a plurality of roll containers (100) in a nesting configuration, **characterized in that**:
- the plurality of roll containers (100) are according to any of the preceding claims, and **in that**
- said plurality is lifted from below and transported with lifting forks (200) of a forklift.
